# EUROPÄISCHE PATENTSCHRIFT

(11) **EP 1 565 309 B1**
(45) Veröffentlichungstag und Bekanntmachung des Hinweises auf die Patenterteilung: **28.06.2006**
(21) Anmeldenummer: 03780055.4
(22) Anmeldetag: 25.11.2003
(51) Int. Cl.: B32B 5/18, C09J 7/02, B05D 5/08

(54) **SCHAUMSTOFF-FORMKÖRPER MIT DEHÄVISER OBERFLÄCHENAUSSTATTUNG**
FOAM MOULDED BODY COMPRISING A NON-ADHESIVE SURFACE
CORPS MOULE EN MOUSSE COMPORTANT UNE SURFACE NON ADHESIVE

(30) Priorität: 25.11.2002 DE 10254922
(43) Veröffentlichungstag der Anmeldung: 24.08.2005
(73) Patentinhaber: Alveo AG, 6002 Luzern (CH)
(72) Erfinder: GIORGETTA, Silvio, CH-6300 Zug (CH)
(74) Vertreter: Strehl Schübel-Hopf & Partner
(86) Internationale Anmeldenummer: PCT/EP2003/013262
(87) Internationale Veröffentlichungsnummer: WO 2004/048080

(56) Entgegenhaltungen:
- DE-A- 3 207 236
- US-A- 5 061 535
- US-B1- 6 468 451

## Beschreibung

Die Erfindung betrifft einen Schaumstoff-Formkörper, insbesondere eine Schaumstoffbahn mit einer dehäsiven Oberfläche in der Art, wie sie typischerweise von Abdeckfilme und - papieren der Klebebandindustrie bekannt ist.
Schaumstoffbahnen werden für eine Vielzahl von Anwendungen wie Dicht- und Klebebändern, Dichtungen, Abstandhaltern, Membranen, Polstern, Isolationen, Umhüllungen usw. eingesetzt, bei denen der Schaumstoff mittels einer selbstklebenden Klebstoffbeschichtung am Einsatzort befestigt wird, wie z.B. Dichtbänder im Haus und Isolationsmembranen im Automobil.
Diese Selbstklebebeschichtung wird entweder ganz- oder teilflächig, linien- oder punktförmig und meist, aber nicht ausschliesslich, einseitig aufgetragen und mit einer Abdeckfolie oder einem Abdeckpapier bis zum Moment der Befestigung am Einsatzort geschützt. Schaumstoffbahnen werden in den obengenannten Anwendungen aus verschiedenen Gründen anderen Materialien wie Filmen, Papieren,Textilien, Vliesen etc vorgezogen: Schaumstoffbahnen sind komprimierbar, weich, flexibel und schmiegen sich an rauhe, konturierte oder anderstweitig unregelmässige, nicht plane Oberflächen an. Zudem sind Schaumstoffbahnen und daraus hergestellte Teile und Artikel auch dichtend, schlagdämpfend, thermisch und akustisch isolierend, gasdicht, wasserdicht und selbsttragend. Daneben sind sie thermisch formbar und mechanisch bearbeitbar durch Prozesse wie z.B. Tiefziehen, , Prägen, Spalten, Schleifen und Perforieren. Die Ausprägung der genannten Eigenschaften und die Eignung für die angeführten Verarbeitungsprozesse ist abhängig von den verwendeten Polymeren, vom Schäumungsgrad, jedoch auch von weiteren Herstell- und Verarbeitungsparametern.

Während bei den obengenannten Anwendungen sowohl der Schaumstoff für sich wie auch der Haftklebstoff und die Abdeckfolie bzw. das Abdeckpapier ihre Funktion erfüllen, so stellt sich doch das grundsätzliche Problem, dass die Abdeckfolie bzw. das Abdeckpapier für den Anwender ein grosses Abfallproblem darstellen. Um dieses Problem zu lösen, werden heute Schaumstoffträger von den Weiterverarbeitern mit einem dehäsiv ausgerüsteten Film permanent ausgestattet, der z.B. mit Klebstoff auf die Schaumstoffbahn auflaminiert wird. Dieses Vorgehen ist aufwändig sowohl was den Prozess betrifft als auch in Hinblick auf die Kosten des zugekauften dehäsiven Films. US-B1-6,468,451 offenbart ein Selbstklebeband mit einen Polypropylenschaumträger, der auf einer Seite mit einer Selbstklebenden Beschichtung und auf der gegenüberliegenden Seite mit einer Antihaftbeschichtung versehen ist die antihaftbeschichtung enthält modifizierte photoaushärtende Siliconpolymere.

Die Anmelderin hat Versuche durchgeführt, Schaumstoffe direkt dehäsiv mit Siliconen zu beschichten, diese scheiterten aber an den Verfahren der thermischen Siliconvernetzung, die durch die hohe Temperatur den Schaumstoffträger unzulässig schädigten (Silicone mit Pt- oder Sn-katalysiertem Vernetzungssystem). Als weiteres Problem besteht das Risiko, dass bei nicht vollständig ausgehärteten Siliconsystemen die Haftklebstoffe von migrierenden, wegen mangelnder Vernetzung nicht vernetzten Siliconbestandteilen verseucht wurden. Im weiteren wurde das Problem beobachtet, dass durch die hohe Temperatur der thermischen Vernetzung Bestandteile der Schauinstoffrezepturen in zu hohem Ausmass an die Oberflächen, und speziell in die dehäsive Schicht hinein und durch diese hindurch migrierten und somit deren Eigenschaften bzw. die Eigenschaften des aufliegenden Haftklebstoffs beeinträchtigten.

Es ist demgemäß Aufgabe der Erfindung, Schaumstoff-Formkörper bereitzustellen, deren Oberfläche derart dehäsiv ausgestattet ist, dass daraus gefertigte selbstklebend ausgerüstete Formteile, wie Bänder, Bahnen etc. auf sich selbst gestapelt oder aufgewickelt werden können, ohne dass die Schaumstoffe bzw. die Klebeschicht kontaminiert oder thermisch geschädigt wird.

Gegenstand der Erfindung ist somit ein Schaumstoff-Formkörper aus einem offenzellig oder geschlossenzellig geschäumten Polymeren, der dadurch gekennzeichnet ist, dass mindestens eine seiner Oberflächen vollständig oder teilweise mit einer dehäsiven Beschichtung aus einer gehärteten, modifizierten Siliconverbindung ausgestattet ist, erhältlich durch Auftragen einer lösungsmittelfreien modifizierten siliconverbindung, welche ein oligomers silicon ist, das mit vernetzbaren definischen Gruppen und/oder Epoxidgruppen modifiziert ist, auf das Polymer und Härten der Beschichtung durch elektromagnetische Strahlung.

Ein erfindungsgemäßer Schaumstoff ermöglicht also durch weitere Verarbeitung, speziell durch Klebstoffbeschichten ein Produkt herzustellen, das vom Anwender ohne Abdeckpapier verwendet werden kann und gleichzeitig bei der Herstellung von Klebebändern bzw. -folien die Aufwendungen der Filmkaschierung erspart. Die dehäsive Ausrüstung des Erfindungsgegenstands beruht auf Verbindungen, die durch elektromagnetische Strahlung (UV- oder Elektronenstrahlung) unter Vermeidung hoher Temperaturen gehärtet werden können.

Die Form der Schaumstoffe, die gemäß der Erfindung mit einer dehäsiven Beschichtung versehen werden können, unterliegt keiner speziellen Beschränkung, vorzugsweise sind dies jedoch Schaumstoffbahnen oder durch Tiefziehen oder Pressformen dreidimensional verformte Schaumstoffbahnen oder solche, deren Oberfläche mit einem Prägeverfahren strukturiert wurde. Derartige Bahnen können auch durch Nadeln oder mit Laser perforiert sein.

Zur Herstellung der Schaumstoffe verwendbare Polymere sind insbesondere Olefin-Homopolymere und Olefin-Copolymere, wie Polyethylen (LDPE, MDPE, HDPE), Copolymere von Ethylen mit anderen α-Olefinen mit 3 bis 6 Kohlenstoffatomen, Homopolymere und Copolymere der Propylens, wie Polypropylen oder Ethylen-Propylen-Copolymerisat. Geeignet sind aber auch andere Ethylen-Copolymere, wie LLDPE, VLLDPE, E/VA, E/BA, E/MA, E/EA, E/AS, E/VOH, Polybutylen, thermoplastische Elastomere oder Polyvinylchlorid, Polyurethan, Polystyrol, Polyamide, Polyester, Polyimide, Polyketone, Polysulfone oder Mischungen von solchen Polymeren.
Für die Zwecke der Erfindung eignen sich alle aus dem Stand der Technik bekannten Schaumstoffe. Diese Schaumstoffe können vernetzt oder unvernetzt sein.
Der verwendete Schaumstoff kann geschlossenzellig, teilweise offenzellig oder offenzellig sein. Außerdem kann die Schaumstoffbahn. einseitig oder beidseitig eine Prozesshaut aufweisen.

Die für die Herstellung der dehäsiven Beschichtung verwendete modifizierte Siliconverbindung soll durch elektromagnetische Strahlung, wie Elektronenstrahlung, UV-Strahlung, härtbar sein. Geeignet dafür sind oligomere Silicone (Polysiloxane), die mit reaktiven, zur Vernetzung befähigten organischen Gruppen modifiziert sind, wie mit ethylenisch ungesättigten Gruppen oder Epoxidgruppen. Beispiele für die ungesättigten Gruppen sind Vinylgruppen, Acrylatgruppen und Methacrylatgruppen.
Für die Zwecke der Erfindung verwendbare modifizierte Silicone sind unter anderem von R. Mehnert et al in UV & EB Curing Technology & Equipment, Volume I, Chapter I, Seiten 5 bis 8 (John Wiley & Sons, 1998) beschrieben. Weitere Beispiele für derartige Siliconverbindungen sind in EP 0 940 422, EP 0 867 460, EP 0 867 462, EP 0 835 897, EP 0 882 752, EP 0 887 367, EP 0 940 458, EP 0 999 230, EP 1 000 959, EP 1 029 878, EP 1 035 153, EP 1 142 929, EP 1 174 469, EP 1 072 660, EP 1 158 023, EP 1 227 133, EP 1 148 089 und EP 1 142 946 angegeben.

Bei der Herstellung des erfindungsgemäßen Schaumstoff-Formikörpers mit einer dehäsiven Beschichtung wird zunächst vorzugsweise die Oberfläche des Schaumstoffmaterials physikalisch oder chemisch behandelt, um die Oberflächenspannung auf den erforderlichen Wert von 35 bis 70 mN/m einzustellen.
Danach wird das Beschichtungsgemisch, das die modifizierte Siliconverbindung, gegebenenfalls einen Photoinitiator, sowie gegebenenfalls Haftvermittler und gegebenenfalls Lösungsmittel enthält, in einer üblichen Beschichtungsvorrichtung, beispielsweise mit Hilfe von Rakeln oder Walzen, aufgetragen.
Vorzugsweise wird ein lösungsmittefreies Beschichtungsgemisch eingesetzt.
Das beschichtete Material bzw. die beschichtete Bahn wird dann in einer inerten Atmosphäre durch UV-Strahlung oder Elektronenstrahlung besttahlt, um die Beschichtung auszuhärten.

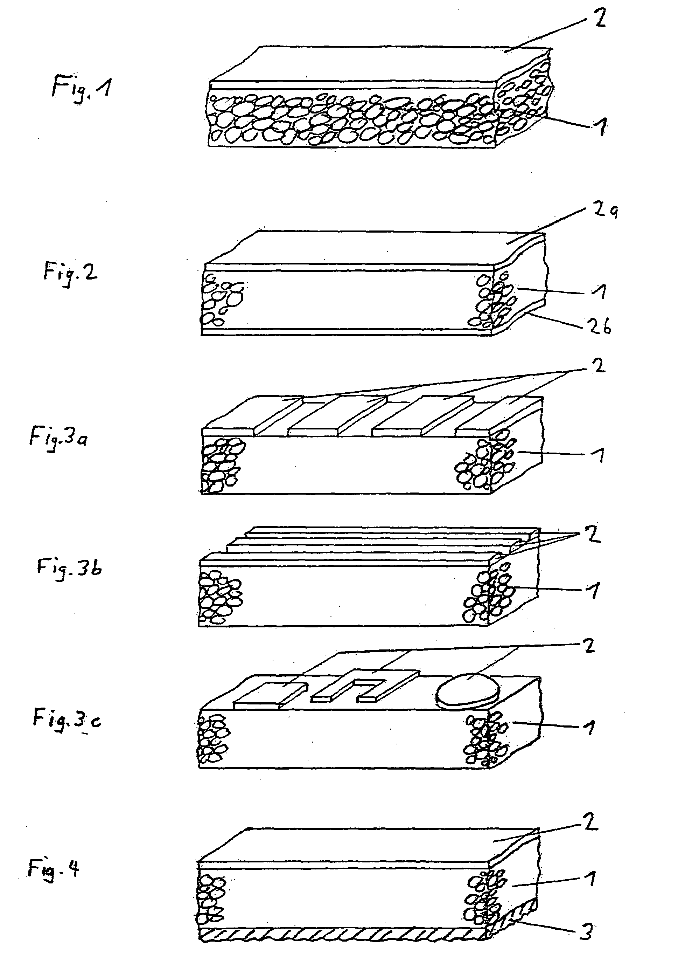

In den beigefücrten Figuren zeigt Fig. 1 eine Schaumstofibahn (1), die erfindungsgemäss direkt dehäsiv beschichtet (2) wurde.

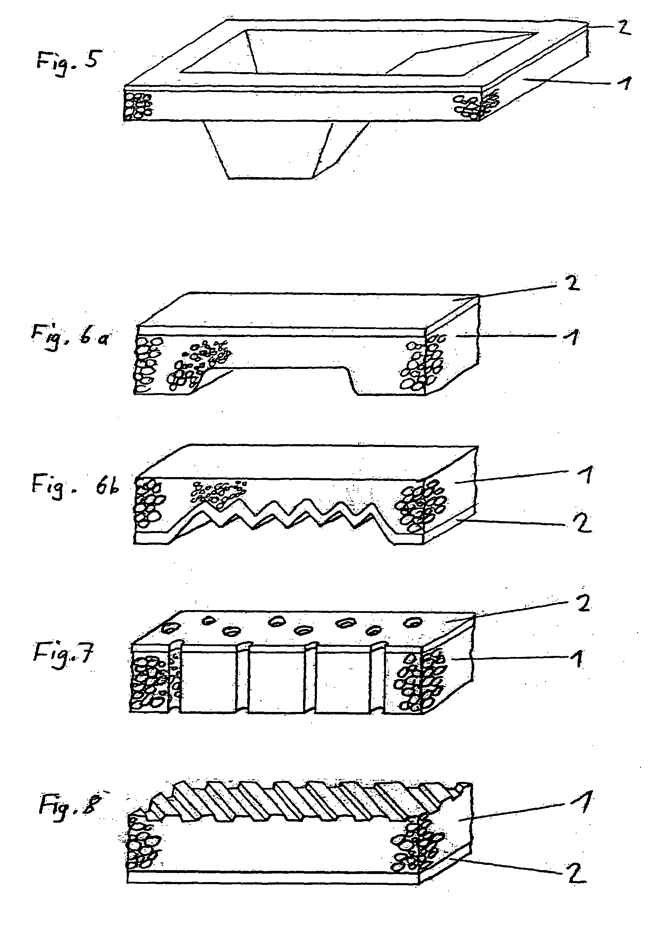

In Figuren 2, 3a, 3b, 3c und 4 werden Ausfuhrungsvarianten gezeigt, nämlich eine beidseitig mit dehäsiven Beschichtungen (2a, 2b) ausgestattete Schaumstoffbahn (1) in Fig. 2 , bzw. teilflächig ausgestattete Varianten mit quer (Fig. 3a), längs (Fig 3b) oder beliebig (Fig. 3c) angeordneten dehäsiven Beschichtungen wie auch eine Ausführung (Fig. 4), bei der die der dehäsiven Beschichtung (2) gegenüberliegende Oberfläche mit einer anderstweitigen funktionellen Ausstattung (3) versehen ist. Eine weitere Ausführung eines tiefgezogenen Schanmstoffabschnitts ist in Figur 5 dargestellt und zwei heisspressgeformte Varianten in Fig. 6a, wo die der dehäsiven Beschichtung gegenüberliegende Seite verpresst wurde, und in Fig. 6b, wo die Seite mit der dehäsiven Beschichtung verpresst wurde. Schliesslich wird in Fig.7 eine mit einem Nadel- oder Laserverfahren perforierte Ausführung und in Fig. 8 eine A mit geprägter, in diesem Beispiel gerieften Oberfläche dargestellt.

Die Erfindung wird nachstehend anhand von beispielhaften Ausfuhrungsformen näher beschrieben.

Der Erfindungsgegenstand gemäss Figur 1 wird in einer ersten Ausführung ausgehend von einer Polyolefin-Schaumstoffbahn (1) hergestellt, wie zB. im Patent CH 505681 (physikalisch vernetzter Polyolefin-Schaumstoff) und EP 0159384 (physikalisch vernetzter Polypropylenschaumstoff), in EP 0329490 (chemisch-physikalisch vernetzter Polyolefin-Schaumstofl). Weiter Ausführungen beruhen auf anderen Polymeren, wie in EP 0053190 A1(PVC-Schaumstoff) oder in US 4216177 (PUR Schaumstoff) beschrieben. Diese erste Ausführung gemäss Fig. 1 wird auf einer Seite physikalisch oder chemisch, z.B. mit einer Coronaentladung oder mit Fluorgas (nach EP 0214635), behandelt, um die Oberflächenspannung auf das je nach Anwendung erforderliche Mass von 35 - 70 mN/m zu erhöhen. Sodann wird das Beschichtungsgemisch, z.B. ein Siliconacrylatsystem, dem für die nachfolgende UV Vernetzung ein Photoinitiator beigemischt ist, mit einem Mehrrollen-Auftragswerk auf die vorbehandelte Seite aufgetragen und die beschichtete Bahn unter Inertatmosphäre unter einem UV Strahler durchgeführt, um die Beschichtung auszuhärten und somit eine Schaumstoffbahn (1) mit einer dehäsiven Siliconbeschichtung (2) zu erhalten. Zwei Beispiele für eine sehr leicht ablösbare und eine bei einem höheren Kraftwert kontrolliert ablösbare Dehäsivbeschichtung sind in der folgenden Tabelle beschrieben.

**Tabelle.**

| Komponente | Siliconacrylat | Siliconacrytat | Siliconacrylat | Photoinitiator | Haftvermittler | | Finat Test FTM 10*) | Finat Test FTM 10*) | Finat Test FTM 11*) |
|---|---|---|---|---|---|---|---|---|---|
| Chemische Formel | Siliconacrylat mit tiefem Acrylatanteil (ca. 2.5 %) | Siliconacrylat mit mittlerem Acrylatanteil (ca. 10%) | Siliconacrylat mit hohem Acrylatanteil (ca. 20 %) | 2-Hydroxy-2-methyl- 1-phenyl-1-propanon CAS Nr. 7473-98-5 | Trifunktionaler Säureester CAS Nr. 28961-43-5 (s. MSDS) | | | | |
| Produkt + Anbieter | Goldschmidt AG Tego RC 902 | Goldschmidt AG Tego RC 715 | Goldschmidt AG Tego RC 711 | Ciba Darocur 1173 | Sartomer SR 9051 | | Tesa 7476 | Tesa 7475 | |
| | % | % | % | | % | FG g/m² | AK N/m | AK N/m | RKK % |
| Formulierung 1: sehr dehäsiv | 70 | | 30 | 2 | 5 | 1.3 | 17 | 2.8 | 85 |
| Formulierung 2: kontrolliert debäsiv | | 70 | 30 | 2 | 5 | 1.1 | 35 | 5.5 | 87 |

| | | | | | | | | | |
|---|---|---|---|---|---|---|---|---|---|
| FG : Flächengcwicht | | | | | | | | | |
| AK : Ablösekraft, nach 1 Tag Lagerung bei 40°C | | | | | | | | | |
| RKK: Rcstktebbaft | | | | | | | | | |
| ¹⁾Gemisch von Methacrylatsäureester und ethoxylierter Trimethylolpropan-Triacrylat-Ester | | | | | | | | | |
| *) beschrieben in FINAT technisches Handbuch, 6. Ausgabe 2001 | | | | | | | | | |

## Patentansprüche

1. Schaumstoff-Formkörper aus einem geschlossenzellig oder offenzellig geschäumten Polymeren, der auf mindestens einer seiner Oberflächen vollständig oder teilweise mit einer dehäsiven Beschichtung aus einer gehärteten, modifizierten Siliconverbindung ausgestattet ist, erhältlich durch Auftragen einer lösungsmittelfreien modifizierten Siliconverbindung, welche ein oligomeres Silicon ist, das mit vernetzbaren olefinisch ungesättigten Gruppen und/oder mit Epoxidgruppen modifiziert ist, auf das Polymer, und Härten der Beschichtung durch elektromagnetische Strahlung.

2. Formkörper nach Anspruch 1, wobei der Schaumstoff ein Polyolefinschaumstoff ist, bevorzugt ein vernetzter Polyolefinschaumstoff.

3. Formkörper nach Anspruch 1, wobei der Schaumstoff ein Polyurethanschaumstoff ist.

4. Formkörper nach Anspruch 1, wobei der Schaumstoff ein Polyvinylchlorid-Schaumstoff ist.

5. Formkörper nach einem der Ansprüche 1-4, wobei die modifizierte Siliconverbindung mit (Meth)acrylatgruppen modifiziert ist.

6. Formkörper nach einem der Ansprüche 1 bis 5, wobei die dehäsive Beschichtung in einer Menge im Bereich von 0,1 bis 10 g/m², vorzugsweise von 0,4 bis 2 g/m² aufgetragen ist.

7. Formkörper nach einem der Ansprüche 1 bis 6, wobei die Beschichtung einen Härtungsinitiator enthält und durch Bestrahlung mit UV-Strahlung gehärtet ist.

8. Formkörper nach einem der Ansprüche 1 bis 6, wobei die Beschichtung durch Elektronenstrahlung gehärtet ist.

9. Formkörper nach einem der Ansprüche 1 bis 8, der eine Schaumstoffbahn darstellt.

## Claims

1. Foam moulding made of a closed cell or open cell foamed polymer, which is completely or partially provided with a release coating of a cured, modified silicone compound on at least one of the surfaces thereof, obtainable by applying a solvent-free modified silicone compound, which is an oligomeric silicone being modified by crosslinkable olefinically unsaturated groups and/or by epoxide groups, on the polymer, and curing the coating by means of electromagnetic radiation.

2. Foam moulding according to claim 1, wherein the foam is a polyolefine foam, preferably a crosslinked polyolefine foam.

3. Foam moulding according to claim 1, wherein the foam is a polyurethane foam.

4. Foam moulding according to claim 1, wherein the foam is a polyvinyl chloride foam.

5. Foam moulding according to anyone of claims 1 to 4, wherein the modified silicone compound is modified with (meth)acrylate groups.

6. Foam moulding according to anyone of claims 1 to 5, wherein the release coating is applied in an amount in the range of 0.1 to 10 g/m², preferably from 0.4 to 2 g/m².

7. Foam moulding according to anyone of claims 1 to 6, wherein the coating contains a curing initiator and is cured by irradiation with UV radiation.

8. Foam moulding according to anyone of claims 1 to 6, wherein the coating is cured by electron radiation.

9. Foam moulding according to anyone of claims 1 to 8, which is a foam web.

## Revendications

1. Corps moulé en mousse constitué d'un polymère expansé à alvéoles ouvertes ou à alvéoles fermées, lequel est muni sur au moins une de ses surfaces totalement ou partiellement d'un revêtement non adhésif constitué d'un composé de silicium durci modifié, obtenu par application sur le polymère d'un composé de silicium modifié exempt de solvant, lequel est un silicium oligomère qui est modifié avec des groupes réticulables oléfiniquement insaturés et/ou avec des groupes époxide, et par durcissement du revêtement par rayonnement électromagnétique.

2. Corps moulé selon la revendication 1, dans lequel la mousse est une mousse de polyoléfine, de préférence une mousse de polyoléfine réticulée.

3. Corps moulé selon la revendication 1, dans lequel la mousse est une mousse de polyuréthane.

4. Corps moulé selon la revendication 1, dans lequel la mousse est une mousse de poly(chlorure de vinyle).

5. Corps moulé selon l'une quelconque des revendications 1-4, dans lequel le composé de silicium modifié est modifié avec des groupes (méth)acrylates.

6. Corps moulé selon l'une quelconque des revendications 1 à 5, dans lequel le revêtement non adhésif est déposé dans une quantité dans un domaine de 0,1 à 10 g/m², de préférence de 0,4 à 2 g/m².

7. Corps moulé selon l'une quelconque des revendications 1 à 6, dans lequel le revêtement contient un initiateur de durcissement et est durci par irradiation avec un rayonnement UV.

8. Corps moulé selon l'une quelconque des revendications 1 à 6, dans lequel le revêtement est durci par rayonnement d'électrons.

9. Corps moulé selon l'une quelconque des revendications 1 à 8, lequel représente une bande de mousse.
